# FASCICULE DE BREVET EUROPEEN

(11) **EP 2 173 529 B1**
(45) Date de publication et mention de la délivrance du brevet: **12.03.2014**
(21) Numéro de dépôt: 08806165.0
(22) Date de dépôt: 04.07.2008
(51) Int. Cl.: B29B 9/12, C08J 3/00, C08J 3/22, C08K 3/00, C08K 3/22, C08K 5/00, C08K 5/04, C08K 5/34, C08L 23/06, C08L 23/12, C08L 91/06, C09C 1/62

(54) **PROCÉDÉ DE FABRICATION D'UN MÉLANGE MAÎTRE**
VERFAHREN ZUR HERSTELLUNG EINER VORMISCHUNG
PROCESS OF MANUFACTURING A MASTERBATCH

(30) Priorité: 06.07.2007 FR 0704921
(43) Date de publication de la demande: 14.04.2010
(73) Titulaire: Societe Lefrant Rubco, 80400 Muille Villette (FR)
(72) Inventeur: STROUK, Hervé, F-78260 Achères (FR)
(74) Mandataire: Cabinet Plasseraud
(86) Numéro de dépôt international: PCT/FR2008/051247
(87) Numéro de publication internationale: WO 2009/010673

(56) Documents cités:
- WO-A-2005/014714
- WO-A-2005/103140
- DE-U1-202004 005 474

## Description

La présente invention concerne un procédé de fabrication d'un mélange-maître (masterbatch, en anglais) comprenant la réalisation d'un mélange comprenant au moins un liant, au moins un additif et/ou au moins un pigment, et le pastillage dudit mélange, caractérisé en ce que le mélange-maître ne comprend pas de thermoplastique. L'invention concerne également ledit mélange-maître ainsi que l'utilisation d'un tel mélange-maître pour la préparation d'un thermoplastique.

Les polymères appelés résines thermoplastiques sont des composés, dérivés d'éléments constitutifs organiques se formant naturellement, qui fondent lorsqu'on les chauffe. Ce sont des matières «transformables à l'état fondu», ce qui signifie qu'on peut leur donner des formes utilisables lorsqu'elles sont en phase fluide (liquide, ramollie ou visqueuse). Dans la plupart des procédés de fabrication, les thermoplastiques sont chauffés, puis formés par moulage par injection, extrusion ou thermoformage, avant d'être refroidis afin que le produit fini conserve sa forme.

On trouve aujourd'hui de nombreux types de thermoplastiques offrant une vaste gamme de propriétés intéressantes. Les thermoplastiques les plus répandus sont le polychlorure de vinyle, le polystyrène, les acryliques, les polyamides, et les polyoléfines. On peut les rendre aussi souples que le caoutchouc, aussi rigides que le métal et le béton, ou les fabriquer aussi transparents que le verre, pour un usage dans de nombreux produits de tuyauterie et autres composants. Ils ne s'oxydent pas, ont une haute résistance à la corrosion et sont d'excellents isolants thermiques et électriques.

De par leur légèreté, leur haute résistance mécanique et leur résistance aux effets de l'environnement, les thermoplastiques constituent un matériau idéal notamment pour le bâtiment (les installations de tuyauteries, les canalisations, etc.), les emballages, le packaging (bouteilles et flacons), les isolations électriques, l'électroménager, l'habillement, les huisseries de fenêtres et l'automobile.

Les thermoplastiques comprennent une matière de base (la résine, encore nommée polymère) ainsi que des matières actives, pour améliorer les propriétés chimiques et physiques du matériau, notamment la résistance aux chocs, la couleur, la plasticité, la résistance au vieillissement, la résistance aux UV, etc.

Dans la présente invention, on entend par « matières actives » des additifs et/ou des pigments qui sont compris dans le mélange-maître selon l'invention et qui sont par la suite incorporés dans un thermoplastique afin de lui conférer certaines propriétés.

Généralement, pour leurs différentes applications, il est nécessaire de stabiliser et/ou de colorer dans la masse les matières plastiques.

Traditionnellement, l'incorporation des pigments et des additifs s'effectue en deux étapes. Cette incorporation correspond à une quantité d'environ 1% en poids en moyenne, voire plus, dans la pièce finie, cette quantité étant fonction de l'application de la pièce finie. En raison de la grande viscosité des matières plastiques, une première étape, appelée extrusion ou phase dite de compoundage, est effectuée. Cette étape d'extrusion comprend l'incorporation des matières actives à chaud (environ 240°C) et à des pressions très élevées dans un polymère très visqueux (plusieurs dizaines de milliers de Poises) par malaxage et cisaillement, le mouillage des pigments, le broyage des pigments, la dispersion des additifs et pigments, et le mélange des différents éléments chimiques. Une seconde étape consiste en la mise en forme de la matière plastique finale réalisée par les transformateurs ou les équipementiers.

Le compoundage est une technique assez peu rentable dans l'industrie. En outre, l'étape de malaxage entraîne une perte de l'efficacité des pigments et des adjuvants.

C'est pourquoi, dans l'industrie des matières plastiques, il est également connu d'utiliser des mélanges-maîtres qui sont des concentrés en matières actives dans un polymère. Ces derniers sont incorporés dans les matières plastiques au moment de la mise en forme. Les procédés de fabrication de mélange-maître s'effectuent en trois étapes bien distinctes, à savoir le mélange à sec du polymère, des additifs et/ou des pigments, l'extrusion (elle-même comprenant un malaxage, un refroidissement et une granulation) et le conditionnement en granulés solides. On distingue, selon le type de pigments ou d'adjuvants, le mélange-maître blanc, noir ou multicolore ; et le mélange-maître d'additifs.

Un avantage du mélange-maître est qu'il est économique puisqu'il permet aux plasturgistes de ne mélanger que des solides facilement manipulables, mais surtout d'éviter cette phase de compoundage où tout le produit est malaxé et passé dans une extrudeuse. Par exemple, pour incorporer environ 1% en poids en moyenne de matières actives dans un polymère, il suffit d'utiliser un mélange-maître concentré à 50% en poids et d'en incorporer 2% en poids pendant la mise en forme. Exceptés les problèmes d'agglomérats de particules, la technique est tout à fait reproductible.

En revanche, les procédés de préparation de mélange-maître classiques présentent un certain nombre d'inconvénients et de contraintes comme notamment l'absence d'universalité c'est-à-dire l'obligation d'employer la même famille de polymères que celle de la matière à stabiliser et/ou à colorer puisque le mélange-maître comprend déjà initialement le polymère en plus des matières actives à incorporer dans le thermoplastique. Pour un thermoplastique donné, il est donc indispensable de préparer un mélange-maître à base de la même famille de thermoplastique. Ainsi, le mélange-maître doit être modifié ou remplacé à chaque changement de polymère.

Des mélanges-maître de ce genre sont par exemple connus des documents WO 2005/103140 et WO 2005/014714 et DE 20 2004 005474 qui décrivent tous les trois des mélanges-maîtres à base de polyoléfines ou de résines polyoléfines.

Il existe deux inconvénients majeurs, à savoir la nécessité d'un malaxage important pour incorporer les additifs (fluide à chaud) et les pigments (solides, solubles ou non) dans la masse fondue et la nécessité d'un mélange à sec à froid ou à chaud en amont. La phase de malaxage est généralement réalisée à l'aide de malaxeurs double vis, entraînant notamment une perte de la force colorante des pigments et la destruction des particules telles que les nacres, les pigments nacrés, et les pigments ou adjuvants à effets spéciaux, un affaiblissement des propriétés des additifs tels que les agents anti-UV, les agents anti-statiques et les agents ignifugeants. En effet, lorsqu'un pigment nacré possède des aspérités ou des crevasses ou des cassures dans sa structure solide, la lumière diffuse dans toutes les directions. La réflexion de la lumière est donc atténuée, ce qui rend le pigment nacré peu voire pas brillant. En outre, pour obtenir la coloration souhaitée, il faut donc incorporer une concentration plus importante que prévue de colorant puisqu'une partie de celui-ci est altérée lors du malaxage.

Par ailleurs, les températures élevées et les fortes pressions nécessaires aux procédés de préparation de mélange-maître engendrent des coûts énergétiques et des coûts financiers importants.

De tels procédés présentent également un auto-échauffement. Il s'agit en fait de la dissipation visqueuse (ou échauffement interne), bien connue en rhéologie qui provient de la conjonction du malaxage et de la particulièrement grande viscosité des polymères. Par conséquent, le malaxage des polymères engendre très souvent un échauffement interne, parfois très important, de la masse fondue. Un autre inconvénient est la formation d'agglomérats en phase de mélange due à des forces électrostatiques, ce qui entraîne l'apparition de points noirs dans le thermoplastique constituant la pièce finie. Il est bien évident que l'existence de points noirs est d'autant plus gênante quand le thermoplastique est transparent. Encore un autre inconvénient est une limite de la concentration en matières actives du fait de la viscosité du polymère support à l'état fondu. En effet, l'incorporation dans le polymère fondu de produits solides tels que des pigments ou certains additifs, mélangés à d'autres produits solides à température ambiante et fluides dans l'extrudeuse, mais avec une très faible viscosité par rapport au polymère fondu, atteint très vite des limites dans les procédés classiques de fabrication des mélanges-maîtres. Notamment lorsqu'il s'agit de mélanges et de pré-mélanges des composants puis de l'extrusion avec ou sans incorporation au cours de la phase d'extrusion.

En outre, les coûts de maintenance de ces procédés classiques de préparation de mélanges-maîtres sont très élevés et indispensables pour garantir la qualité de l'incorporation puis de la bonne diffusion du mélange-maître dans le polymère final chez le transformateur, l'étape de transformation consistant notamment en la découpe, le pliage, l'usinage, le thermoformage, l'injection, le collage et le polissage de la matière plastique en ce qui concerne les thermodurcissables et l'injection, l'injection soufflage, l'extrusion, l'extrusion soufflage, le thermoformage en ce qui concerne les thermoplastiques.

Il subsiste donc le besoin de proposer des procédés nouveaux permettant l'incorporation d'additifs et/ou de pigments dans des mélanges-maîtres, économiques, universels du fait qu'ils soient utilisables dans tout type de thermoplastique, et qui n'altèrent pas, voire peu ou moins les matières actives.

Or, la Demanderesse a maintenant découvert, après d'intenses travaux de recherche, qu'il était possible d'obtenir de tels concentrés de matières actives en réalisant un mélange-maître exempt de résine thermoplastique de base en tant que support des matières actives et comprenant au moins un liant, mélangé aux additifs et/ou pigments.

L'invention vise donc un procédé de fabrication d'un mélange-maître comprenant :
- la préparation d'un mélange comprenant au moins un liant, au moins un additif et/ou au moins un pigment, et
- le pastillage dudit mélange, caractérisé en ce que ledit liant n'est ni un thermoplastique ni une résine et en ce que le liant a une température de fusion comprise entre 60°C et 320°C, de préférence comprise entre 65° et 230°c, et encore plus préférentiellement comprise entre 70°C et 220°C et qu'il est sous forme solide à température ambiante.

On entend par « température ambiante », une température comprise généralement entre environ 18°C et environ 35°C, par exemple environ 23°C.

Dans le contexte de cette description, le terme « compris entre » doit être interprété comme incluant les bornes indiquées.

L'élaboration du mélange-maître sous forme de pastilles selon l'invention nécessite deux étapes : une première étape de préparation d'un mélange et une seconde étape de pastillage dudit mélange.

La première étape comprend la fusion d'un mélange d'au moins un liant à au moins un additif et/ou au moins un pigment. Avantageusement, cette première étape est réalisée à une température comprise entre environ 60°C et 300°c, de préférence entre environ 65°C et 200°C, et encore plus préférentiellement entre environ 70°C et 90°C.

Il est bien entendu que, pour des raisons de coûts énergétiques, il sera plus avantageux d'ajuster au plus bas la température de sorte que la fusion du mélange ait lieu, cette température de fusion étant dépendante de la nature des composants du mélange utilisés.

De manière préférentielle, le mélange est effectué à pression atmosphérique et notamment dans une cuve chauffée et agitée.

Parmi les liants utilisables dans le procédé selon l'invention, on peut citer le (Z)-13-docosenamide commercialisé sous la marque CRODAMIDE^{®} E par la société CRODA, un alkylamide éthoxylé commercialisé sous la marque Atmer^{®} 167 par la société ICI, du glycérol monostéarate commercialisé sous la marque Atmer^{®} 122 par la société ICI, un monoester de glycérol commercialisé sous la marque Atmer® 129 par la société CIBA, la Cire PE520^{®} commercialisée par la société Clariant, l'octadecyl-3-(3'5-di-tert-butyl-4-hydroxyphenyl)propionate commercialisé sous la marque Irganox^{®} 1076 par la société CIBA, le produit comprenant un mélange de phénol et de phosphite commercialisé sous la marque Hostanox^{®} SE10 par la société CLARIANT, le poly-[6-[(1,1,3,3-tetramethylbutyl)-imino]-1,3,5-triazine-2,4-diyl][2-(2,2,6,6-tetramethylpiperidyl) - amino]-hexamethylene [4-(2,2,6,6-tetramethyl-piperidyl)-imino] commercialisé sous la marque Chimassorb^{®} 944 LD par la société CIBA, le tris(2,4-diter-butyl-phenyl) phosphite commercialisé sous la marque Hostanox^{®} PAR24 par la société Clariant, des benzotriazoles tels que celui commercialisé sous la marque Tinuvin^{®} 326 par la société CIBA, le poly-(N-β-hydroxyethyl-2,2,6,6-tetra-methyl-4 hydroxy-piperidyl succinate commercialisé sous la marque Chimassorb^{®} 622 par la société CIBA, un mélange de monoester de glycérol et d'alkylamine éthoxylée commercialisé sous la marque le mélange Atmer^{®} 123 & 163 par la société ICI, le PE68^{®} Antiflamme BROMINE commercialisé par GREAT LAKES, une cire commercialisée sous la marque Uniwax^{®} 1760 par la société UNICHEMA, des cires de paraffine, des cires de polyéthylène et de polypropylène, des cires EBS (Ethylène Bis stéaramide) ; et leur mélanges.

La quantité de liant présente dans le mélange-maître est comprise entre 5% et 100% en poids, de préférence entre 5% et 80% en poids, et encore plus préférentiellement entre 5% et 50% en poids par rapport au poids total de la composition du mélange maître. Plus le mélange-maître est concentré et plus la mise en forme est économique pour le transformateur.

Les additifs utilisables selon l'invention peuvent être choisis parmi des stabilisateurs d'UV pour lesquels on peut distinguer les absorbeurs d'UV et les inhibiteurs de photo-oxydation; des stabilisateurs thermiques ; des antioxydants; des agents lubrifiants (ou agents glissants) internes et/ou externes; des absorbeurs d'humidité dans le cas de l'utilisation de pigments hydrophiles ; des agent anti-adhérents ; des agents anti-statiques internes et/ou externes; des agents ignifugeants; des plastifiants; des charges minérales; des charges organiques ; des fongicides ; des agents anti-buée ; des biocides ; des agents aromatiques conférant certaines fragrances aux matières plastiques ; et leurs mélanges.

Parmi des stabilisateurs d'UV, on peut distinguer les absorbeurs d'UV tels que les benzotriazoles comme, par exemple, les produits commercialisés sous la marque Tinuvin^{®} 234, Tinuvin^{®} 326, Tinuvin^{®} 327, Tinuvin^{®} 571 par la société CIBA et le produit commercialisé sous la marque Cyasorb^{®} UV-5411 par la société CYTEC , les hydroxybenzophénones tels que le 2-hydroxy-4-(octyloxy)benzophenone, commercialisé sous la marque Chimassorb^{®} 81 par la société CIBA, et les oxalinilides tels que les produits commercialisés sous la marque Hostavin^{®} 306 liq et Hostavin^{®} VSU P par la société CLARIANT ; et les inhibiteurs de photo-oxydation tels que les photostabilisants à base d'amines à empêchement (Hindered amine light stabilizers, HALS en anglais) comme par exemple les produits commercialisés sous la marque Chimassorb^{®} 622, Tinuvin^{®} 765, Tinuvin^{®} 770 et Chimassorb^{®} 944 par la société CIBA et les produits commercialisés sous la marque Hostavin^{®} N 24 liq et Hostavin^{®} N 30 P par la société CLARIANT ; et leurs mélanges.

Parmi les antioxydants ou stabilisateurs thermiques, on peut citer le tetrakis{methylene-3-(3,5-di-tert-butyl-4-hydroxyphenyl)propionate}methane, l'octadecyl-3-(3'5-di-tert-butyl-4-hydroxyphenyl)propionate et le tetrakis(2,4-ditertiobutylphenyl)4,4'-diphenyl diphosphonite commercialisés respectivement sous les marques Irganox^{®} 1010, Irganox^{®} 1076 et Irgafos® P-PEPQ par la société CIBA, le tris(2,4-diter-butyl-phenyl)phosphite commercialisé sous la marque Hostanox^{®} PAR24 par la société CLARIANT, le dioctadecyldisulphide commercialisé sous la marque Hostanox^{®} M 101 PWD par la société CLARIANT ainsi que le produit comprenant un mélange de phénol et de phosphite commercialisé sous la marque Hostanox^{®} SE10 par la société CLARIANT ; et leurs mélanges.

Parmi les agents lubrifiants (ou agents glissants) internes et/ou externes, on peut citer le stéarate de calcium, la cire d'acide montanique, les cires de polyéthylène, les silicones, les hydrocarbures à longues chaînes avec des groupes polaires et les amides primaires, secondaires et bis-amides telles que les Crodamines^{®} 203, 212, BR, EBS, SR, E et ER et les Oléamines^{®} O, OR et VR commercialisées par la société CRODA.

Parmi les absorbeurs d'humidité, on peut citer les hydroxydes tels que l'hydroxyde de calcium.

Parmi les agents anti-statiques internes, on peut citer les amines grasses éthoxylées telles que les produits commercialisés sous les marque Armostat^{®} 300, 400, 600 et 700 par la société AKZO NOBEL, les polyols polyhydroxylés poléthoxylés, du monostearate de glycérol tel que le produit commercialisé sous la marque Armostat^{®} 1000 par la société AKZO NOBEL, du lauric diethanolamide commercialisé sous la marque Armostat^{®} 2000 par la société AKZO NOBEL, et les alkylsulfonates tels que le produit commercialisé sous la marque Armostat^{®} 3002 par la société AKZO NOBEL et parmi les agents externes, on peut citer les ethers phosphoriques d'alcools éthoxylés et les chlorures d'éthoxylamine quaternaire comme notamment le produit commercialisé sous la marque Dehydat^{®} 831 par la société COGNIS CANADA CORPORATION et les produits commercialisés sous la marque Atmer^{®} 1013 et Atmos^{®} 150 par la société ICI ; et leurs mélanges.

Parmi les agents ignifugeants, on peut citer la boehmite commercialisée sous la marque Apymag^{®} AOH 850 par la société NABALTEC, du trihydrate d'aluminium, de l'hydroxyde de magnésium, des charges inertes à base de silicium, du phosphore rouge, des acides phosphoriques, des hydrocarbures chlorés, et des polybromodiphényles ; et leurs mélanges.

Parmi les plastifiants, on peut citer les phtalates, les époxydes, les esters d'acides aliphatiques dicarboxyliques, des polyesters et des phosphates, et leurs mélanges.

Parmi les charges minérales, on peut citer le talc tel que les produits Talc^{®} 1445 et Talc^{®} OOS et Talc^{®} 10MOOS commercialisés par la société Talc de luzenac, le graphite, le mica, la silice et la craie telle que le produit commercialisé sous la marque Craie Durcal^{®} 2 par la société OMYA, et leurs mélanges.

Parmi les charges organiques, on peut citer la farine de bois et les fibres synthétiques ou naturelles.

Parmi les fongicides et les biocides on peut citer les additifs utilisé dans le traitement Sanitized^{®} développé et commercialisé par la société Sanitized LA.

Parmi les agents anti-buée, on peut citer les esters de sorbitans.

La quantité d'additifs présente dans le mélange-maître est comprise entre 0% et 100% en poids, de préférence entre 5% et 90% en poids, et encore plus préférentiellement entre 15% et 70% en poids par rapport au poids total de la composition du mélange-maître. Cette plage est maximum car certains additifs peuvent également servir de liant. C'est un autre avantage du procédé de mélanges-maîtres pastillés selon l'invention.

Avantageusement, les additifs ayant une température de fusion supérieure à 75°C sont utilisés.

Dans le cadre de la présente invention, on entend par « pigments » les pigments organiques et les pigments inorganiques (ou minéraux). On peut citer parmi les pigments organiques notamment les anthraquinones ; les phtalocyanines ; les pigments polycycliques tels que les diaryles ; les pyrazolones ; les isoindolinones ; les pigments azoïques incluant les pigments monoazoïques tels que le monoazo yellow pigment (P.Y.10), le hansa yellow pigment (P.Y.1), le laked pigment (P.Y.100), le β-naphthol pigment (P.R.1), le naphthol AS pigment (P.R.2) et le naphthol AS pigment lake (P.R.151) ; les diketopyrrolo pyrrole (DPP) ; les quinacridones ; les perylenes et perinones ; les thioindigo ; les dioxazines ; et leurs mélanges. Parmi les pigments minéraux, on peut citer par exemple, le dioxyde de titane, les pigments à base de cobalt, les titanates, les oxydes de fer, les pigments de manganèse, les oxydes de chrome, le noir de carbone, le noir de fumée, le lithopone (pigment mixte de zinc et de baryum), les chromates de plomb et de molybdène, les pigments de cadmium tels que le sulfure de cadmium, le cadmium sulfoselenide, le sulfure de mercure et de cadmium (cinabre de cadmium), les oxydes de métaux mixtes (Cr, Ni, Fe, Co, Cu, etc.), et leurs mélanges.

Des pigments nacrés peuvent également être incorporés dans le mélange maître. On peut citer notamment du mica recouvert d'une couche de dioxyde de titane, d'oxyde de chrome ou d'oxyde de fer. Et plus particulièrement les produits commercialisés sous les marques IRIODIN^{®} 100 Satin, 111, 123KU26, 151, 153 Flash Pearl, 217 Lopper Pearl, 219 Lilac Pearl, 249 Flash Gold, 300 Gold, 201 Gold Fine Gold, 305 Solar Gold, 205 Platinium Gold, 100 Silver, EP Silver 10, 303 Royal Gold 211 fine Red, 507 scarabée Red, 502 Red Brown, 215 Red, 7235 Ultra Green, 231 fine Green, 299 Flash Green, 221 fine Blue, 225 Rutile Blue, 7225 Ultra Blue, LS 800, LS 805, LS 820, LS 825, LS 830, LS 840, LS 850 par la société MERCK, et les produits commercialises sous les marques Perlescent Phoenix^{®} 1261, Perlescent Phoenix^{®} 1271, Mastersafe^{®} Gold 06103 RPG et Gold 35103 PG par la société Eckart.

Des pigments donnant des effets spéciaux peuvent également être incorporés. Notamment, on peut citer le produit commercialisé sous la marque Pigment cuivre Paillette^{®} 38433GA par la société Engelhardt, qui donne un effet pailleté, le produit commercialisé sous la marque BRONZE^{®} L900 OR par la société Engelhardt qui donne un effet métallisé, et le produit commercialisé sous la marque Pigment Lumilux^{®} par la société CLARIANT, qui donne un effet phosphorescent.

La quantité de pigments présente dans le mélange-maître est comprise entre 0% et 90% en poids, de préférence entre 15% et 80% en poids, et encore plus préférentiellement entre 35% et 70% en poids par rapport au poids total de la composition du mélange-maître.

Par le procédé selon l'invention, les particules de nacre ne sont pas cassées, ce qui permet à l'effet nacré de rester intact. Notamment, contrairement aux procédés classiques, le procédé selon l'invention permet que les effets rendus issus des pigments à paillettes soient optimum puisque les paillettes ne sont ni détruites ni décolorées.

Les listes de liant, d'additifs et de pigments doivent être considérées comme ni exhaustives ni limitatives.

Le fait qu'aucun polymère thermoplastique ne soit utilisé pour la préparation d'un mélange-maître selon l'invention, permet d'obtenir un mélange liquide à faible viscosité. Cela évite notamment de fournir de l'énergie mécanique (malaxage) pour homogénéiser le mélange. Par conséquent, les matières actives ne sont pas détruites par action mécanique lors du mélange et il est alors envisageable d'incorporer des pigments nacrés et/ou des produits à effets spéciaux comme un effet de phosphorescence sans risquer leur altération et leur perte d'efficacité. En outre, la faible viscosité permet de concentrer en matières actives entre environ 30% et environ 90 % en poids, de préférence entre 35% et 85% en poids, et encore plus préférentiellement entre 40% et 70% en poids du poids total de la composition du mélange maître.

Un autre avantage du procédé selon l'invention est l'absence de formation d'agglomérats des matières actives et notamment des pigments organiques, en raison de la présence de liant entre les molécules de matières actives, ce qui diminue les forces électrostatiques. Les molécules de matières actives n'ont donc pas tendance à s'agréger.

La seconde étape du procédé selon l'invention est une étape de pastillage du mélange obtenu à l'issue de la première étape.

Au sens de la présente invention, on entend par « pastillage », le processus consistant à faire durcir une masse fondue sous forme de pastilles.

On entend par « pastille » dans le cadre de la présente invention une partie du mélange-maître selon l'invention sous forme dure, par exemple cylindrique, d'une forme ronde aplatie ou encore hémisphérique. Le diamètre des pastilles peut aller de quelques dixièmes de millimètre, par exemple environ 0,3mm, à environ 2 centimètres. Mais plus préférentiellement de 1 mm (micro pastille) à 8 mm.

D'une manière générale, le mélange fondu obtenu à la fin de la première étape est mis en forme et subit une trempe ou un refroidissement afin d'obtenir des pastilles.

Le pastillage peut être réalisé par un procédé continu ou par tout autre procédé connu de l'homme du métier. On peut citer, notamment, le procédé Rotoform^{®} de la société Sandvik qui comprend l'utilisation d'un cylindre constitué d'une multitude de trous équidistants, en rotation sur un axe par lequel arrive le mélange fluide au travers d'un circuit d'acheminement. Le cylindre est chauffé, de manière permanente, par un fluide caloporteur circulant dans l'axe fixe. Le mélange en fusion se présente devant le cylindre de manière à déposer par simple gravité sur une bande de refroidissement des gouttelettes liquéfiés et à permettre un dépôt régulier de celles-ci. La bande de refroidissement est constituée d'une bande métallique en mouvement, refroidie par un circuit d'eau.

Un autre exemple de procédé de pastillage est le procédé utilisant une pastilleuse à disques (Disc pastillator^{®}) de la société GMF-GOUDA. Le Disc Pastillator^{®} se compose d'un ou plusieurs plateaux refroidisseurs horizontaux dont le nombre dépend de la capacité requise, cette capacité étant fonction elle-même de la nature du mélange. Un arbre creux à entraînement vertical relie les différents plateaux refroidisseurs. La masse fondue est dosée sur un plateau tournant par intermittence et se transforme ainsi en pastilles. Au moment où la masse est déposée sur le plateau, celle-ci commence à se durcir grâce à l'arrivée par le sommet du fluide réfrigérant qui circule par l'arbre creux vers les différents plateaux, puis quitte la machine par l'arbre d'entraînement sur le haut de la pastilleuse. Après une seule rotation, le cycle complet de dosage, de durcissement et de formation de pastilles est terminé. Le résultat se traduit par des pastilles faciles à transporter, de forme et de qualité parfaitement uniforme.

On peut citer, encore, le procédé développé par la société Kaiser qui comprend l'utilisation d'un cylindre constitué d'une multitude de trous équidistants dans le creux de cannelures également équidistants et brochées, en rotation sur un axe par lequel arrive le mélange fluide au travers d'un circuit d'acheminement. Le cylindre cannelé est chauffé de manière permanente, soit par un fluide caloporteur circulant dans l'axe fixe. Le mélange en fusion se présente devant les trous des cannelures et un engrenage interne de diamètre plus petit que le diamètre interne du cylindre, vient, en poussant le fluide à travers les trous et en venant tourner à l'intérieur du cylindre cannelé, déposer sur une bande de refroidissement des gouttelettes liquéfiées et à permettre un dépôt régulier de celles-ci. La bande de refroidissement est constituée d'une bande métallique en mouvement, refroidie par un circuit d'eau.

On peut citer, également, un autre procédé développé également par la société Kaiser, qui comprend l'utilisation d'une cuve rectangulaire et d'un système à aiguilles plongeant dans le bain visqueux contenu dans le container rectangulaire constitué d'une multitude de trous équidistants dans son fond. Les aiguilles du système poussent le fluide à travers les trous du container et viennent déposer sur une bande de refroidissement des gouttelettes liquéfiées et à permettre un dépôt régulier de celles-ci. La bande de refroidissement est constituée d'une bande métallique en mouvement, refroidie par un circuit d'eau.

Les pastilles ainsi obtenues sont faciles à manipuler, elles ne sont pas friables et ne présentent donc pas de poussières. Pour évaluer la friabilité des pastilles, on utilise des tests visuels et manuels. Notamment, une pastille est considérée comme non friable si par simple pression de la main elle demeure entière.

D'autres avantages du procédé de l'invention sont notamment le fait qu'il permet d'obtenir un effet de concentration intéressant des matières actives, qu'il comprend peu d'étapes, et qu'il nécessite peu de manipulation et moins de nettoyage qu'avec les procédés classiques de malaxage.

Un autre objet de l'invention est un mélange-maître comprenant au moins un liant dont la température de fusion est comprise entre 60°C et 320°C, de préférence comprise entre 65°C et 230°C, et encore plus préférentiellement comprise entre 70°C et 220°C, et comprenant également au moins un additif et/ou au moins un pigment.

Les liants, les additifs et les pigments appropriés sont ceux identifiés ci-dessus par rapport au procédé de fabrication d'un mélange-maître selon l'invention.

Le mélange-maître selon l'invention est sous la forme de pastilles dont la forme est hémisphérique, sphérique ou lenticulaire. Le diamètre des pastilles peut aller de quelques dixièmes de millimètre, par exemple environ 0,3 mm à environ 2 cm. Mais plus préférentiellement de 1 mm (micro pastille) à 8 mm. En outre, ce mélange-maître peut être obtenu par le procédé selon l'invention.

Un autre objet de l'invention est l'utilisation d'un mélange-maître selon l'invention ou obtenu par la mise en oeuvre du procédé de préparation selon l'invention, dans la préparation d'un thermoplastique comprenant l'incorporation dudit mélange-maître dans au moins une résine de base à l'état fondu.

Pour obtenir le thermoplastique final, ces pastilles sont ensuite mélangées à la résine de base correspondante selon tout procédé connu de l'homme du métier. Le fait de ne pas avoir à modifier la formulation des pastilles quelque soit le thermoplastique final rend le procédé selon l'invention universel.

Dans certaines applications la présente invention pourra s'appliquer à certains thermodurcissables (injection, calandrage, etc.), lorsque la mise en forme et la coloration se feront simultanément par exemple.

On entend par « résine de base ou polymère de base » dans la présente invention, la matière de base des thermoplastiques avant l'addition de tout additif et/ou pigment ou de tout mélange-maître.

Parmi les principales résines de base thermoplastiques utilisables selon le procédé de l'invention, on peut citer notamment le polyamide (PA), l'acrylonitrile butadiène styrène (ABS), l'acrylonitrile méthacrylate de méthyle (AMMA), l'acétate de cellulose (CA), le copolymère d'éthylène/propylène (E/P), le copolymère d'éthylène/tétrafluoroéthylène (ETFE), l'éthylene-vinyl acetate (EVAC), l'éthylene-alcool vinylique (EVOH), le méthyl-méthacrylate-acrylonitrile-butadiene-styrene (MABS), le méthyl cellulose (MC), le méthyl-méthacrylate-butadiene-styrene (MBS), le polyamide (PA), le polyamide imide (PAI), le (polyester) polybutylène téréphthalate (PBT), le polycarbonate (PC), le polyéthylène (PE), le polyéthylène haute densité (PEhd), le polyestercarbonate (PEC), le polyétheréthercétone (PEEK), le polyétherester (PEEST), le polyéthercétone (PEK), le poly(naphtalate d'éthylène) (PEN), le polyéthersulfone (PESU), le poly(éthylène téréphthalate) (PET), le (poly)térephtalate de polyéthylène (PETP), le polymère perfluoro alcoxyl alcane (PFA), le polyimide (PI), le polycétone (PK), le polyméthacrylate de méthyle (PMMA), le polyméthyl pentène (PMP), le polyoxyméthylène (POM), le polypropylène (PP), le poly(phénylène Ether) (PPE), le poly(oxyde de propylène) (PPOX), le poly(Sulfure de phénylène) (PPS), le polystyrène (PS), le polysulfone (PSU), le polytétrafluoréthylène (PTFE), le poly(acétate de vinyle) (PVAC), le poly(chlorure de vinyle) (PVC), le poly(fluorure de vinylidène) (PVDF), le poly(fluorure de vinyle) (PVF), le poly(styrène-butadiène) (S/B), le styrène anhydride maléique (SMAH), la résine ester vinylique (VE), etc.

De manière avantageuse, la température à laquelle le mélange-maître est incorporée dans la résine de base est comprise entre 65°C et 350°C, de préférence entre 100°C et 300°C, et encore plus préférentiellement entre 110°C et 260°C.

L'invention sera maintenant illustrée par les exemples non limitatifs suivants.

### EXEMPLES

### Exemple A : Préparation de mélanges-maîtres

### Exemple 1-A : mélange-maître comprenant un liant et un additif.

Dans une cuve cylindrique chauffée et agitée, on introduit 65% en poids *(ou 65 grammes)* d'Atmer® 129 (fourni par CIBA et distribué par Bodo Möller Chemie) et 35% *(ou 35 grammes)* de stéarate de calcium distribué par le groupe Arnaud. Lorsque le mélange fondu est homogène, on procède au pastillage à l'aide du Rotoform^{®} de la société Sandvik.
Paramètres du procédé :

| | |
|---|---|
| Température d'alimentation en °C | : 140 |
| Température bande de refroidissement en °C | : 19 |
| Vitesse Bande m/mn | : 30 |
| Longueur refroidissement en m | : 10 |
| Largeur de bande utile en cm | : 60 |
| Débit en kg/h | : 120 |

On obtient des pastilles non friables, de forme hémisphérique, de diamètre compris entre 3mm et 5mm et de hauteur comprise entre 2mm et 2,5mm.

### Exemple 2-A : mélange-maître comprenant un liant et un pigment.

Dans une cuve sphérique chauffée et agitée, on introduit 40% en poids *(ou 40 grammes)* de cire^{®} PE520 (CLARIANT) et 60% *(ou 60 grammes)* de Tinuvin^{®} 770 (CIBA). Lorsque le mélange fondu est homogène, on procède au pastillage à l'aide du Rotoform^{®} de la société Sandvik.
Paramètres du procédé :

| | |
|---|---|
| Température d'alimentation en °C | : 150 |
| Température bande de refroidissement en °C | : 19 |
| Vitesse Bande m/mn | : 30 |
| Longueur refroidissement en m | : 10 |
| Largeur de bande utile en cm | : 60 |
| Débit en kg/h | : 150 |

On obtient des pastilles non friables, de forme ovoïde hémisphérique, de diamètre compris entre 4mm et 6mm et de hauteur comprise entre 2,5mm et 3mm.

### Exemple 3-A : mélange-maître comprenant un liant et un pigment nacré.

Dans une cuve conique chauffée et agitée, on introduit 40% en poids *(ou 40 grammes)* de cire^{®} PE520 (CLARIANT) et 60% *(ou 60 grammes)* de nacres IRIODIN^{®} 123 KU26 (MERCK). Lorsque le mélange fondu est homogène, on procède au pastillage à l'aide du Rotoform^{®} de la société Sandvik.
Paramètres du procédé :

| | |
|---|---|
| Température d'alimentation en °C | : 200 |
| Température bande de refroidissement en °C | : 13 |
| Vitesse Bande m/mn | : 18 |
| Longueur refroidissement en m | : 10 |
| Rotoform^{®} avec agitateur dynamique | : oui |
| Largeur de bande utile en cm | : 60 |
| Débit en kg/h | : 75 |
| Forme pastilles obtenues | : lenticulaire |
| Taille pastilles obtenues | : |
| - Diamètre en mm | : 2 à 4 |
| - Hauteur en mm | : 1 à 1,5 |

On obtient des pastilles non friables, de forme lenticulaire, de diamètre compris entre 2mm et 4mm et de hauteur comprise entre 1mm et 1,5mm.

### Exemple 4-A : mélange-maître comprenant un liant, un additif et un pigment.

Dans une cuve chauffée et agitée cylindrique, on introduit 55% en poids *(ou 55 grammes)* de cire EBS^{®} Uniwax 1760 (UNICHEMA) et 40% en poids(ou *40 grammes)* de pigment de phtalocyanine vert^{®} K8730 (BASF) et 5% de stéarate de Zinc distribué par la société SMPC. Lorsque le mélange fondu est homogène, on procède au pastillage à l'aide du Rotoform^{®} de la société Sandvik.
Paramètres du procédé :

| | |
|---|---|
| Température d'alimentation en °C | : 190 |
| Température bande de refroidissement en °C | : 19 |
| Vitesse Bande m/mn | : 23 |
| Longueur refroidissement en m | : 10 |
| Rotoform^{®} avec agitateur dynamique | : oui |
| Largeur de bande utile en cm | : 60 |
| Débit en kg/h | : 100 |

On obtient des pastilles non friables, de forme hémisphérique, de diamètre compris entre 3,5mm et 5mm et de hauteur comprise entre 2mm et 2,5mm.

### Exemple 5-A : mélange-maître comprenant un liant, un additif et un pigment.

Dans une cuve sphérique chauffée et agitée, on introduit soit 18% en poids *(ou 18 grammes)* de cire EBS^{®} Uniwax 1760 (UNICHEMA) et 80% en poids *(ou 80 grammes)* de pigment phosphorescent LUMILUX^{®} Green (HONEYWELL) et 2% de stéarate de zinc distribué par la société SMPC. Lorsque le mélange fondu est homogène, on procède au pastillage à l'aide du Rotoform^{®} de la société Sandvik.
Paramètres du procédé :

| | |
|---|---|
| Température d'alimentation en °C | : 200 |
| Température bande de refroidissement en °C | : 19 |
| Vitesse Bande m/mn | : 30 |
| Longueur refroidissement en m | : 10 |
| Rotoform^{®} avec agitateur dynamique | : oui |
| Largeur de bande utile en cm | : 60 |
| Débit en kg/h | : 195 |

On obtient des pastilles non friables, de forme ovoïde hémisphérique, de diamètre compris entre 2,5mm et 4mm et de hauteur comprise entre 1,5mm et 2mm.

### Exemple 6-A : mélange-maître comprenant un liant-additif et un additif solide.

Dans une cuve sphérique chauffée et agitée, on introduit 75% en poids *(ou 75 grammes)* de PE-68^{®} (octabromophenolether de la société GREAT LAKES, ci-après nommé OBPE) et 25% *(ou 25 grammes)* de Triox Blanc^{®} (trioxyde d'antimoine Sb₂O₃ de la société Les Mines de la Lucette). Lorsque le mélange fondu est homogène, on procède au pastillage à l'aide du Rotoform^{®} de la société Sandvik.
Paramètres du procédé :

| | |
|---|---|
| Température d'alimentation en °C | : 200 |
| Température bande de refroidissement en °C | : 19 |
| Vitesse Bande m/mn | : 30 |
| Longueur refroidissement en m | : 10 |
| Rotoform^{®} avec agitateur dynamique | : oui |
| Largeur de bande utile en cm | : 60 |
| Débit en kg/h | : 140 |

On obtient des pastilles peu ou non friables, de forme hémisphérique, de diamètre compris entre 1,5mm et 4mm et de hauteur comprise entre 1,5mm et 2mm.

### Exemple B : Préparation de thermoplastiques à l'aide de mélanges-maîtres selon l'invention et comparaison avec des mélanges-maîtres classiques

### Exemple 1-B :

On mélange à sec manuellement 0,8% en poids du mélange-maître pastillé préparé selon l'exemple 3-A avec 99,2% en poids de polyéthylène haute densité PEHD Vestolen^{®} A6016 fourni par STAMYLAN FRANCE-SABIC. On prépare des plaquettes injectées réalisées sur une presse à injecter de la société Battenfeld.

On prépare un mélange-maître classique, en mélangeant à sec dans un mélangeur rapide Henschel, 25% en poids de Nacre^{®} 123 KU26 de la société MERCK, 12% en poids de cire^{®} PE520 de la société CLARIANT, 55% en poids de polyéthylène basse densité PELL^{®} 6201RQ de la société EXXON MOBIL et 8 % en poids de stéarate de butyle (Marcol^{®} 82 distribué par la société Lambert Rivière). Puis, on extrude le mélange obtenu sur une extrudeuse bivis de la société Leistritz et on granule par un granulateur de la société SHEER pour obtenir des granulés cylindriques. On mélange à sec manuellement 2% de ce mélange-maître classique à 98% de polyéthylène haute densité PEHD Vestolen^{®} A6016 fourni par STAMYLAN FRANCE-SABIC. On prépare des plaquettes injectées réalisées sur une presse à injecter de la société Battenfeld.

On effectue une comparaison visuelle du rendu (gloss en anglais) entre les plaquettes en polyéthylène haute densité PEHD Vestolen^{®} A6016 de la société STAMYLAN FRANCE-SABIC avec 0,8 % de mélange maître pastillé et 2% de mélange maître classique.

On constate que l'effet nacré ou brillance visuelle est plus important avec les plaquettes réalisées avec le mélange-maître pastillé préparé selon l'exemple 3-A.

### Exemple 2-B :

On mélange à sec manuellement 0,2% en poids du mélange-maître pastillé préparé selon l'exemple 4-A avec 98,3% de polyéthylène haute densité PEHD Vestolen^{®} A6016 fourni par STAMYLAN FRANCE-SABIC et 1,5% en poids d'un mélange-maître REMAFIN^{®} BLANC RB6-AE de la société CLARIANT comprenant 60% de dioxyde de titane. Le mélange ainsi obtenu est extrudé sur une extrudeuse monovis de laboratoire. Puis, on prépare des plaquettes injectées réalisées sur une presse à injecter de la société Battenfeld.

On compare le mélange-maître pastillé selon l'invention avec un mélange-maître classique de la gamme des REMAFIN^{®} de la société CLARIANT sous forme de granulés cylindriques comprenant 40% en poids de phtalocyanine vert^{®} K8730. On mélange à sec manuellement 0,2% du mélange-maître classique REMAFIN^{®} VERT avec 98,3% de polyéthylène haute densité PEHD Vestolen^{®} A6016 fourni par STAMYLAN FRANCE-SABIC et 1,5% en poids d'un mélange-maître REMAFIN^{®} BLANC RB6-AE de la société CLARIANT comprenant 60% de dioxyde de titane. Le mélange ainsi obtenu est extrudé sur une extrudeuse monovis de laboratoire. Puis, on prépare des plaquettes injectées réalisées sur une presse à injecter de la société Battenfeld.

On mesure la force colorante à l'aide d'un spectrophotomètre SF600 de la société DATACOLOR et un logiciel de mesure de la force colorante de la société SPC.

En comparant la force colorante entre les deux types de plaquettes, on constate qu'en moyenne la force colorante est de 110% par rapport au standard REMAFIN^{®} VERT. Par conséquent, les plaquettes réalisées avec le mélange maître pastillé préparé selon l'invention ont une force colorante en moyenne de 10% supérieure à celle des plaquettes issues du mélange-maître classique extrudé sous la forme de granulés cylindriques.

### Exemple 3-B :

On mélange à sec manuellement 1% en poids du mélange-maître pastillé préparé selon l'exemple 5-A avec 99% en poids de polyéthylène haute densité PEHD Vestolen^{®} A6016 fourni par STAMYLAN FRANCE-SABIC. On prépare des plaquettes injectées réalisées sur une presse à injecter de la société Battenfeld.

On prépare un mélange-maître classique, en mélangeant à sec dans un mélangeur rapide Henschel, 40% en poids de Nacre^{®} 123 KU26 de la société MERCK, 5% en poids de cire^{®} PE520 de la société CLARIANT et 55% en poids de polyéthylène basse densité PELL^{®} 6201RQ de la société EXXON MOBIL. Puis, on extrude le mélange obtenu sur une extrudeuse bivis de la société Leistritz et on granule par un granulateur de la société SHEER pour obtenir des granulés cylindriques. On mélange à sec manuellement 2% de ce mélange-maître classique à 98% de polyéthylène haute densité PEHD Vestolen^{®} A6016 fourni par STAMYLAN France-SABIC. On prépare des plaquettes injectées réalisées sur une presse à injecter de la société Battenfeld.

On effectue une comparaison visuelle du rendu (effet phosphorescent) entre les plaquettes en polyéthylène haute densité PEHD Vestolen^{®} A6016 de la société STAMYLAN FRANCE-SABIC avec 1 % de mélange maître pastillé et 2% de mélange maître classique.

On constate que l'effet phosphorescent est plus important avec les plaquettes réalisées avec le mélange-maître pastillé préparé selon l'exemple 5-A.

### Exemple 4-B :

On mélange à sec manuellement des quantités déterminées (voir tableau 1) du mélange-maître pastillé préparé selon l'exemple 6-A avec 1kg de polypropylène PPH^{®} 7060 fourni par la société ATOFINA. On prépare des bûchettes injectées réalisées sur une presse à injecter de la société Battenfeld.

On prépare un mélange-maître classique, en mélangeant à sec dans un mélangeur rapide Henschel, 36% en poids de PE-68^{®} de la société GREAT LAKES, 12% en poids de Triox Blanc^{®} de la société Les Mines de la Lucette, 48,5% en poids de polypropylène homopolymère Eltex^{®} P HV001PF de la société BP chemical SNC, et 3,5 % de cire PE520^{®} de la société CLARIANT. Puis, on extrude le mélange obtenu sur une extrudeuse bivis de la société Leistritz et on granule par un granulateur de la société SHEER pour obtenir des granulés cylindriques.

On mélange à sec manuellement des quantités déterminées (voir tableau 1) de ce mélange-maître classique à 1kg de polypropylène PPH^{®} 7060 fourni par la société ATOFINA. On prépare des bûchettes injectées réalisées sur une presse à injecter de la société Battenfeld.

| | | | | |
|---|---|---|---|---|
| Masse de mélange-maître pastillé préparé selon l'exemple 6-A (en grammes) | 20 | 30 | 40 | 90 |
| Masse du mélange-maître classique granulé (en grammes) | 42 | 62,5 | 83 | 187,5 |

On compare l'effet ignifugeant entre les deux types de bûchettes ainsi obtenues par mesure du LOI (Limit Oxygen Index, en anglais) ou indice limite d'oxygène à l'aide d'un appareil de la société STANTON REDCROFT FTA, en fonction du taux de matières actives comprenant 75%.d'OBPE et 25% de Sb₂O₃.

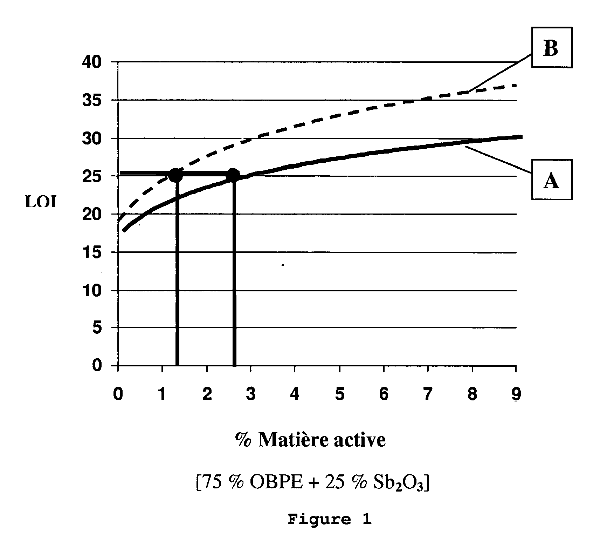

La comparaison se fait à des taux de matières actives comparables dans la pièce finie. Les résultats sont illustrés par la figure 1 où la courbe A représente le mélange-maître pastillé selon l'invention et la courbe B représente le mélange-maître granulé classique.

D'après les courbes, on constate que pour obtenir un Indice Limite d'Oxygène à 25%, il faut incorporer deux fois moins de matières actives (1,3%) avec le mélange maître pastillé qu'avec le mélange-maître classique granulé (2,6 %).

## Revendications

1. Procédé de fabrication d'un mélange-maître comprenant :
- la réalisation d'un mélange comprenant au moins un liant, au moins un additif et/ou au moins un pigment, et
- le pastillage dudit mélange,
**caractérisé en ce que** ledit liant n'est ni un thermoplastique ni une résine et **en ce que** le liant a une température de fusion comprise entre 60°C et 320°C, de préférence comprise entre 65° et 230°c, et encore plus préférentiellement comprise entre 70°C et 220°C et qu'il est sous forme solide à température ambiante.

2. Procédé selon la revendication 1, **caractérisé en ce que** le ou les liants sont choisis parmi le (Z)-13-docosenamide, un alkylamide éthoxylé, un monoester de glycérol tel que le monostéarate de glycérol, l'octadecyl-3-(3'5-di-tert-butyl-4-hydroxyphenyl)propionate, un mélange de phénol et de phosphite, le poly-[6-[(1,1,3,3-tetramethylbutyl)-imino]-1,3,5-triazine-2,4-diyl][2-(2,2,6,6-tetramethylpiperidyl) -amino]-hexamethylene [4-(2,2,6,6-tetramethyl-piperidyl)-imino], le tris(2,4-diter-butyl-phenyl) phosphite, des benzotriazoles, le poly-(N-β-hydroxyethyl-2,2,6,6-tetra-methyl-4 hydroxy-piperidyl succinate, un mélange de monoester de glycérol et d'alkylamine éthoxylée, des cires de paraffine, des cires de polyéthylène et de polypropylène, des cires Ethylène Bis stéaramide; et leur mélanges.

3. Procédé selon la revendication 1 ou la revendication 2, **caractérisé en ce que** la quantité de liant est comprise entre 5% et 100% en poids, de préférence entre 5% et 80% en poids, et encore plus préférentiellement entre 5% et 50% en poids par rapport au poids total de la composition du mélange-maître.

4. Procédé selon l'une quelconque des revendications 1 à 3, **caractérisé en ce que** le ou les additifs sont choisis parmi des stabilisateurs d'UV tels que les absorbeurs d'UV et les inhibiteurs de photo-oxydation; des stabilisateurs thermiques ; des antioxydants; des agents lubrifiants ou agents glissants internes et/ou externes; des absorbeurs d'humidité dans le cas de l'utilisation de pigments hydrophiles ; des agent anti-adhérents ; des agents anti-statiques internes et/ou externes; des agents ignifugeants; des plastifiants; des charges minérales; des charges organiques ; des fongicides ; des agents anti-buée ; des biocides ; des agents aromatiques conférant certaines fragrances aux matières plastiques ; et leurs mélanges.

5. Procédé selon l'une quelconques des revendications 1 à 4, **caractérisé en ce que** la quantité d'additif est comprise entre 0% et 100% en poids, de préférence entre 5% et 90% en poids, et encore plus préférentiellement entre 15% et 70% en poids par rapport au poids total de la composition du mélange-maître.

6. Procédé selon l'une quelconques des revendications 1 à 5, **caractérisé en ce que** le ou les pigments sont choisis parmi les pigments organiques, les pigments minéraux, les pigments nacrés et les pigments à effets spéciaux.

7. Procédé selon l'une quelconques des revendications 1 à 6, **caractérisé en ce que** la quantité de pigments est comprise entre 0% et 90% en poids, de préférence entre 15% et 80% en poids, et encore plus préférentiellement entre 35% et 70% en poids par rapport au poids total de la composition du mélange-maître.

8. Mélange-maître comprenant au moins un liant, **caractérisé en ce que** la température de fusion dudit liant est comprise entre 60°C et 320°C, de préférence comprise entre 65° et 230°c, et encore plus préférentiellement comprise entre 70°C et 220°C, et **en ce qu'**il comprend au moins un additif et/ou au moins un pigment.

9. Mélange-maître selon la revendication 8, **caractérisé en ce que** le ou les liants sont choisis parmi le (Z)-13-docosenamide, un alkylamide éthoxylé, un monoester de glycérol tel que le monostéarate de glycérol, l'octadecyl-3-(3'5-di-tert-butyl-4-hydroxyphenyl)propionate, un mélange de phénol et de phosphite, le poly-[6-[(1,1,3,3-tetramethylbutyl)-imino]-1,3,5-triazine-2,4-diyl][2-(2,2,6,6-tetramethylpiperidyl) -amino]-hexamethylene [4-(2,2,6,6-tetramethyl-piperidyl)-imino], le tris(2,4-diter-butyl-phenyl) phosphite, des benzotriazoles, le poly-(N-β-hydroxyethyl-2,2,6,6-tetra-methyl-4 hydroxy-piperidyl succinate, un mélange de monoester de glycérol et d'alkylamine éthoxylée, des cires de paraffine, des cires de polyéthylène et de polypropylène, des cires Ethylène Bis stéaramide; et leur mélanges.

10. Mélange-maître selon la revendications 8 ou la revendication 9, **caractérisé en ce que** la quantité de liant est comprise entre 5% et 100% en poids, de préférence entre 5% et 80% en poids, et encore plus préférentiellement entre 5% et 50% en poids par rapport au poids total de la composition du mélange-maître.

11. Mélange-maître selon l'une quelconque des revendications 8 à 10, **caractérisé en ce que** le ou les additifs sont choisis parmi des stabilisateurs d'UV tels que les absorbeurs d'UV et les inhibiteurs de photo-oxydation; des stabilisateurs thermiques ; des antioxydants; des agents lubrifiants ou agents glissants internes et/ou externes; des absorbeurs d'humidité dans le cas de l'utilisation de pigments hydrophiles ; des agent anti-adhérents ; des agents anti-statiques internes et/ou externes; des agents ignifugeants; des plastifiants; des charges minérales; des charges organiques ; des fongicides ; des agents anti-buée ; des biocides ; des agents aromatiques conférant certaines fragrances aux matières plastiques ; et leurs mélanges.

12. Mélange-maître selon l'une quelconque des revendications 8 à 11, **caractérisé en ce que** la quantité d'additifs est comprise entre 0% et 100% en poids, de préférence entre 5% et 90% en poids, et encore plus préférentiellement entre 15% et 70% en poids par rapport au poids total de la composition du mélange-maître.

13. Mélange-maître selon l'une quelconque des revendications 8 à 12, **caractérisé en ce que** les pigments sont choisis parmi les pigments organiques, les pigments minéraux, les pigments nacrés et les pigments à effets spéciaux.

14. Mélange-maître selon l'une quelconque des revendications 8 à 13, **caractérisé en ce que** la quantité de pigments est comprise entre 0% et 90% en poids, de préférence entre 15% et 80% en poids, et encore plus préférentiellement entre 35% et 70% en poids par rapport au poids total de la composition du mélange-maître.

15. Utilisation d'un mélange-maître selon l'une quelconque des revendications 8 à 14 ou obtenu par la mise en oeuvre du procédé selon l'une quelconque des revendications 1 à 7 dans la préparation d'un thermoplastique comprenant l'incorporation dudit mélange-maître dans au moins une résine de base à l'état fondu.

16. Utilisation selon la revendication 15, **caractérisé en ce que** le ou les résines de base sont choisies parmi le polyamide, l'acrylonitrile butadiène styrène, l'acrylonitrile méthacrylate de méthyle, l'acétate de cellulose, le copolymère d'éthylène/propylène, le copolymère d'éthylène/tétrafluoroéthylène, l'éthylene-vinyl acetate, l'éthylene- alcool vinylique, le méthyl-méthacrylate-acrylonitrile-butadiene-styrene, le méthyl cellulose, le méthyl-méthacrylate-butadiene-styrene, le polyamide, le polyamide imide, le (polyester) polybutylène téréphthalate, le polycarbonate, le polyéthylène, le polyéthylène haute densité, le polyestercarbonate, le polyétheréthercétone, le polyétherester, le polyéthercétone, le poly(naphtalate d'éthylène), le polyéthersulfone, le poly(éthylène téréphthalate), le (poly)térephtalate de polyéthylène, le polymère perfluoro alcoxyl alcane, le polyimide, le polycétone, le polyméthacrylate de méthyle, le polyméthyl pentène, le polyoxyméthylène, le polypropylène, le poly(phénylène Ether), le poly(oxyde de propylène), le poly(Sulfure de phénylène), le polystyrène, le polysulfone, le polytétrafluoréthylène, le poly(acétate de vinyle), le poly(chlorure de vinyle), le poly(fluorure de vinylidène), le poly(fluorure de vinyle), le poly(styrène-butadiène), le styrène anhydride maléique, et la résine ester vinylique.

17. Utilisation selon la revendication 15 ou la revendication 16, **caractérisé en ce que** la température à laquelle le mélange-maître est incorporé dans la résine de base est comprise entre 65°C et 350°C, de préférence entre 100°C et 300°C, et encore plus préférentiellement entre 110°C et 260°C.

## Patentansprüche

1. Verfahren zur Herstellung eines Masterbatchs, umfassend:
- die Durchführung einer Mischung, umfassend mindestens ein Bindemittel, mindestens einen Zusatzstoff und/oder mindestens ein Pigment, und
- die die Tablettierung der Mischung,
**dadurch gekennzeichnet, dass** das Bindemittel weder ein Thermoplast noch ein Harz ist, und dadurch, dass das Bindemittel eine Schmelztemperatur aufweist, die zwischen 60 °C und 320 °C liegt, vorzugsweise zwischen 65 °C und 230 °C, und noch bevorzugter zwischen 70 °C und 220 °C, und dass es bei Raumtemperatur in fester Form vorliegt.

2. Verfahren nach Anspruch 1, **dadurch gekennzeichnet, dass** das oder die Bindemittel ausgewählt sind aus (Z)-13-Docosenamid, einem ethoxylierten Alkylamid, einem Glycerinmonoester wie z.B. Glycerinmonostearat, Octadecyl-3-(3'5-di-tert-butyl-4-hydroxyphenyl)propionat, einer Mischung aus Phenol und Phosphit, Poly-[6-[(1,1,3,3-tetramethylbutyl)-imino]- 1,3,5-triazin-2,4-diyl] [2-(2,2,6,6-tetramethylpiperidyl) -amino]-hexamethylen [4-(2,2,6,6-tetramethylpiperidyl)-imino], Tris(2,4-diter-butyl-phenyl) phosphit, Benzotriazolen, Poly-(N-ß-hydroxyethyl-2,2,6,6-tetramethyl-4 hydroxy-piperidyl-succinat, einer Mischung aus Glycerinmonoester und ethoxyliertem Alkylamin, Paraffinwachsen, Polyethylen-und Polypropylenwachsen, Ethylen-bis-Stearamidwachsen; und ihren Mischungen.

3. Verfahren nach Anspruch 1 oder Anspruch 2, **dadurch gekennzeichnet, dass** die Menge an Bindemittel zwischen 5 Gew% und 100 Gew% liegt, vorzugsweise zwischen 5 Gew% und 80 Gew% und noch bevorzugter zwischen 5 Gew% und 50 Gew% mit Bezug auf das Gesamtgewicht der Zusammensetzung des Masterbatchs.

4. Verfahren nach einem der Ansprüche 1 bis 3, **dadurch gekennzeichnet, dass** der oder die Zusatzstoffe ausgewählt sind aus UV-Stabilisatoren wie z.B. UV-Absorbern, und Fotooxidationsinhibitoren; thermischen Stabilisatoren; Antioxidantien; internen und/oder externen Schmiermitteln oder Gleitmitteln, Feuchtigkeitsabsorbern für den Fall der Verwendung von hydrophilen Pigmenten; Trennmitteln; internen und/oder externen Antistatika; Flammschutzmitteln; Weichmachern; mineralischen Füllstoffen; organischen Füllstoffen; Fungiziden; Antibeschlagmitteln; Bioziden; Aromastoffen, die Plastikmaterialen bestimmte Düfte verleihen; und ihren Mischungen.

5. Verfahren nach einem der Ansprüche 1 bis 4, **dadurch gekennzeichnet, dass** die Menge an Zusatzstoff zwischen 0 Gew% und 100 Gew% liegt, vorzugsweise zwischen 5 Gew% und 90 Gew% und noch bevorzugter zwischen 15 Gew% und 70 Gew% mit Bezug auf das Gesamtgewicht der Zusammensetzung des Masterbatchs.

6. Verfahren nach einem der Ansprüche 1 bis 5, **dadurch gekennzeichnet, dass** das oder die Pigmente ausgewählt sind aus organischen Pigmenten, mineralischen Pigmenten, Perlglanzpigmenten und Pigmenten mit Spezialeffekten.

7. Verfahren nach einem der Ansprüche 1 bis 6, **dadurch gekennzeichnet, dass** die Menge an Pigmenten zwischen 0 Gew% und 90 Gew% liegt, vorzugsweise zwischen 15 Gew% und 80 Gew% und noch bevorzugter zwischen 35 Gew% und 70 Gew% mit Bezug auf das Gesamtgewicht der Zusammensetzung des Masterbatchs.

8. Masterbatch, umfassend mindestens ein Bindemittel, **dadurch gekennzeichnet, dass** die Schmelztemperatur des Bindemittels zwischen 60 °C und 320 °C liegt, vorzugsweise zwischen 65 °C und 230 °C, und noch bevorzugter zwischen 70 °C und 220 °C, und dadurch, dass er mindestens einen Zusatzstoff und/oder mindestens ein Pigment umfasst.

9. Masterbatch nach Anspruch 8, **dadurch gekennzeichnet, dass** das oder die Bindemittel ausgewählt sind aus (Z)-13-Docosenamid, einem ethoxylierten Alkylamid, einem Glycerinmonoester wie z.B. Glycerinmonostearat, Octadecyl-3-(3'5-di-tert-butyl-4-hydroxyphenyl)propionat, einer Mischung aus Phenol und Phosphit, Poly-[6-[(1,1,3,3-tetramethylbutyl)-imino]-1,3,5-triazin-2,4-diyl][2-(2,2,6,6-tetramethylpiperidyl)-amino]-hexamethylen [4-(2,2,6,6-tetramethylpiperidyl)-imino], Tris(2,4-diter-butyl-phenyl) phosphit, Benzotriazolen, Poly-(N-ß-hydroxyethyl-2,2,6,6-tetramethyl-4 hydroxy-piperidyl-succinat, einer Mischung aus Glycerinmonoester und ethoxyliertem Alkylamin, Paraffinwachsen, Polyethylen-und Polypropylenwachsen, Ethylen-bis-Stearamidwachsen; und ihren Mischungen.

10. Masterbatch nach Anspruch 8 oder Anspruch 9, **dadurch gekennzeichnet, dass** die Menge an Bindemittel zwischen 5 Gew% und 100 Gew% liegt, vorzugsweise zwischen 5 Gew% und 80 Gew% und noch bevorzugter zwischen 5 Gew% und 50 Gew% mit Bezug auf das Gesamtgewicht der Zusammensetzung des Masterbatchs.

11. Masterbatch nach einem der Ansprüche 8 bis 10, **dadurch gekennzeichnet, dass** der oder die Zusatzstoffe ausgewählt sind aus UV-Stabilisatoren wie z.B. UV-Absorbern, und Fotooxidationsinhibitoren; thermischen Stabilisatoren; Antioxidantien; internen und/oder externen Schmiermitteln oder Gleitmitteln; Feuchtigkeitsabsorbern für den Fall der Verwendung von hydrophilen Pigmenten; Trennmitteln; internen und/oder externen Antistatika; Flammschutzmitteln; Weichmachern; mineralischen Füllstoffen; organischen Füllstoffen; Fungiziden; Antibeschlagmitteln; Bioziden; Aromastoffen, die Plastikmaterialen bestimmte Düfte verleihen; und ihren Mischungen.

12. Masterbatch nach einem der Ansprüche 8 bis 11, **dadurch gekennzeichnet, dass** die Menge an Zusatzstoff zwischen 0 Gew% und 100 Gew% liegt, vorzugsweise zwischen 5 Gew% und 90 Gew% und noch bevorzugter zwischen 15 Gew% und 70 Gew% mit Bezug auf das Gesamtgewicht der Zusammensetzung des Masterbatchs.

13. Masterbatch nach einem der Ansprüche 8 bis 12, **dadurch gekennzeichnet, dass** das oder die Pigmente ausgewählt sind aus organischen Pigmenten, mineralischen Pigmenten, Perlglanzpigmenten und Pigmenten mit Spezialeffekten.

14. Masterbatch nach einem der Ansprüche 8 bis 13, **dadurch gekennzeichnet, dass** die Menge an Pigmenten zwischen 0 Gew% und 90 Gew% liegt, vorzugsweise zwischen 15 Gew% und 80 Gew% und noch bevorzugter zwischen 35 Gew% und 70 Gew% mit Bezug auf das Gesamtgewicht der Zusammensetzung des Masterbatchs.

15. Verwendung eines MAsterbatchs nach einem der Ansprüche 8 bis 14 oder erhalten durch die Durchführung des Verfahrens nach einem der Ansprüche 1 bis 7, bei der Zubereitung eines Thermoplasts, umfassend das Beimischen des Masterbatchs zu mindestens einem Basisharz in geschmolzenem Zustand.

16. Verwendung nach Anspruch 15, **dadurch gekennzeichnet, dass** das oder die Basisharze ausgewählt sind aus Polyamid, Acrylonitrilbutadienstyren, Methylacrylonitrilmethacrylat, Celluloseacetat, Ethylen-/Propylencopolymer, Ethylen-/Tetrafluoroethylencopolymer, Ethylenvinylacetat, Ethylen-Vinylalkohol, Methylmethacrylat-acrylonitril-butadien-styren, Methylcellulose, Methylmethacrylat-butadien-styren, Polyamid, Polyamidimid, (Polyester) polybutylenterephthalat, Polycarbonat, Polyethylen, Polyethylen hoher Dichte, Polyestercarbonat, Polyetheretherceton, Polyetherester, Polyetherceton, Poly(ethylennaphtalat), Polyethersulfon, Poly(ethylenterephthalat), Polyethylen(poly)terephtalat, Perfluoroalcoxylalcan-Polymer, Polyamid, Polyceton, Methyle-polymethacrylat, Polymethylpenten, Polyoxymethylen, Polypropylen, Poly(phenylenether), Poly(propylenoxyd), Poly(phenylensulfid), Polystyren, Polysulfon, Polytetrafluorethylen, Poly(vinylacetat), Poly(vinylchlorid), Poly(vinylidenfluorid), Poly(vinylfluorid), Poly(styrenbutadien), Styrolmaleinsäureanhydrid und Vinylesterharz.

17. Verwendung nach Anspruch 15 oder Anspruch 16, **dadurch gekennzeichnet, dass** die Temperatur, bei der der Masterbatch dem Basisharz beigemischt wird, zwischen 65 °C und 350 °C liegt, vorzugsweise zwischen 100 °C und 300 °C und noch bevorzugter zwischen 110 °C und 260 °C.

## Claims

1. Method for manufacturing a masterbatch comprising:
- production of a mixture comprising at least one binder, at least one additive and/or at least one pigment, and
- pelletising of said mixture,
**characterised in that** said binder is neither a thermoplastic nor a resin and **in that** the binder has a melting point between 60°C and 320°C, preferably between 65°C and 230°C, and more preferentially between 70°C and 220°C and that it is in solid form at ambient temperature.

2. Method according to claim 1, **characterised in that** the binder(s) are chosen from (Z)-13-docosenamide, an ethoxylated alkylamide, a glycerol monoester such as glycerol monostearate, octadecyl-3- (3'5-ditert-butyl-4-hydroxyphenyl)propionate, a mixture of phenol and phosphite, poly-[6-[(1,1,3,3-tetramethylbutyl)-imino]-1,3,5-triazine-2,4-diyl] [2-(2,2,6,6-tetramethylpiperidyl)-amino]-hexamethylene [4-(2,2,6,6-tetramethyl-piperidyl)-imino], tris(2,4-diter-butyl-phenyl) phosphite, benzotriazoles, poly-(N-ß-hydroxyethyl-2,2,6,6-tetra-methyl-4 hydroxy-piperidyl succinate, a mixture of glycerol monoester and ethoxylated alkylamine, paraffin waxes, polyethylene and polypropylene waxes, Ethylene Bis stearamide waxes; and mixtures thereof.

3. Method according to claim 1 or claim 2, **characterised in that** the quantity of binder is between 5% and 100% by weight, preferably between 5% and 80% by weight, and more preferentially between 5% and 50% by weight in relation to the total weight of the masterbatch composition.

4. Method according to any one of claims 1 to 3, **characterised in that** the additive(s) are chosen from UV stabilizers such as UV absorbers and photo-oxidation inhibitors; thermal stabilizers; antioxidants; internal and/or external lubricating agents or slip agents; moisture absorbers in the case of the use of hydrophilic pigments; anti-adhesive agents; internal and/or external anti-static agents; flame retardant agents; plasticisers; mineral fillers; organic fillers; fungicides; demisting agents; biocides; aromatic agents giving plastics certain fragrances; and mixtures thereof.

5. Method according to any one of claims 1 to 4, **characterised in that** the quantity of additive is between 0% and 100% by weight, preferably between 5% and 90% by weight, and more preferentially between 15% and 70% by weight in relation to the total weight of the masterbatch composition.

6. Method according to any one of claims 1 to 5, **characterised in that** the pigment(s) are chosen from organic pigments, mineral pigments, pearlescent pigments and pigments with special effects.

7. Method according to any one of claims 1 to 6, **characterised in that** the quantity of pigments is between 0% and 90% by weight, preferably between 15% and 80% by weight, and more preferentially between 35% and 70% by weight in relation to the total weight of the masterbatch composition.

8. Masterbatch comprising at least one binder, **characterised in that** the melting point of said binder is between 60°C and 320°C, preferably between 65°C and 230°C, and more preferentially between 70°C and 220°C, and **in that** it comprises at least one additive and/or at least one pigment.

9. Masterbatch according to claim 8, **characterised in that** the binder(s) are chosen from (Z)-13-docosenamide, an ethoxylated alkylamide, a glycerol monoester such as glycerol monostearate, octadecyl-3- (3'5-ditert-butyl-4-hydroxyphenyl)propionate, a mixture of phenol and phosphite, poly-[6-[(1,1,3,3-tetramethylbutyl)-imino]-1,3,5-triazine-2,4-diyl] [2-(2,2,6,6-tetramethylpiperidyl)-amino]-hexamethylene [4-(2,2,6,6-tetramethyl-piperidyl)-imino], tris(2,4-diter-butyl-phenyl) phosphite, benzotriazoles, poly-(N-β-hydroxyethyl-2,2,6,6-tetra-methyl-4 hydroxy-piperidyl succinate, a mixture of glycerol monoester and ethoxylated alkylamine, paraffin waxes, polyethylene and polypropylene waxes, Ethylene Bis stearamide waxes; and mixtures thereof.

10. Masterbatch according to claim 8 or claim 9, **characterised in that** the quantity of binder is between 5% and 100% by weight, preferably between 5% and 80% by weight, and more preferentially between 5% and 50% by weight in relation to the total weight of the masterbatch composition.

11. Masterbatch according to any one of claims 8 to 10, **characterised in that** the additive(s) are chosen from UV stabilizers such as UV absorbers and photo-oxidation inhibitors; thermal stabilizers; antioxidants; internal and/or external lubricating agents or slip agents; moisture absorbers in the case of the use of hydrophilic pigments; anti-adhesive agents; internal and/or external anti-static agents; flame retardant agents; plasticisers; mineral fillers; organic fillers; fungicides; demisting agents; biocides; aromatic agents giving plastics certain fragrances; and mixtures thereof.

12. Masterbatch according to any one of claims 8 to 11, **characterised in that** the quantity of additives is between 0% and 100% by weight, preferably between 5% and 90% by weight, and more preferentially between 15% and 70% by weight in relation to the total weight of the masterbatch composition.

13. Masterbatch according to any one of claims 8 to 12, **characterised in that** the pigments are chosen from organic pigments, mineral pigments, pearlescent pigments and pigments with special effects.

14. Masterbatch according to any one of claims 8 to 13, **characterised in that** the quantity of pigments is between 0% and 90% by weight, preferably between 15% and 80% by weight, and more preferentially between 35% and 70% by weight in relation to the total weight of the masterbatch composition.

15. Use of a masterbatch according to any one of claims 8 to 14 or obtained using the method according to any of claims 1 to 7 in the preparation of a thermoplastic comprising the incorporation of said masterbatch in at least one basic resin in the molten state.

16. Use according to claim 15, **characterised in that** the basic resin(s) are chosen from polyamide, acrylonitrile butadiene styrene, methyl methacrylate acrylonitrile, cellulose acetate, ethylene/propylene copolymer, ethylene/tetrafluoroethylene copolymer, ethylene-vinyl acetate, ethylene vinyl alcohol, methyl-methacrylate-acrylonitrile-butadiene-styrene, methyl cellulose, methyl-methacrylate-butadiene-styrene, polyamide, polyamide imide, polybutylene terephthalate (polyester), polycarbonate, polyethylene, high-density polyethylene, polyester-carbonate, polyetheretherketone, polyetherester, polyetherketone, poly(ethylene naphthalate), polyethersulphone, poly(ethylene terephthalate), polyethylene (poly)terephthalate, perfluoroalkoxy alkane polymer, polyimide, polyketone, methyl polymethacrylate, polymethyl pentene, polyoxymethylene, polypropylene, poly(phenylene Ether), poly(propylene oxide), poly(phenylene sulphide), polystyrene, polysulphone, polytetrafluorethylene, poly(vinyl acetate), poly(vinyl chloride), poly(vinylidene fluoride), poly(vinyl fluoride), poly(styrene-butadiene), styrene maleic anhydride, and vinyl ester resin.

17. Use according to claim 15 or claim 16, **characterised in that** the temperature at which the masterbatch is incorporated into the basic resin is between 65°C and 350°C, preferably between 100°C and 300°C, and more preferentially between 110°C and 260°C.
